# EUROPÄISCHE PATENTANMELDUNG

(11) **EP 1 040 743 A2**
(43) Veröffentlichungstag der Anmeldung: **04.10.2000**
(21) Anmeldenummer: 00111735.7
(22) Anmeldetag: 21.12.1996
(51) Int. Cl.: A01B 73/00

(54) **Fahrzeug zum Transport eines insbesondere fahrbaren Geräts**

(30) Priorität: 16.01.1996 US 586524
(62) Teilanmeldung aus: 96120723.0
(71) Anmelder: DEERE & COMPANY, Moline, Illinois 61265-8098 (US)
(72) Erfinder: Walters, James C., Ottumwa, Iowa 52501 (US); Rosenbalm, Wesley, Blakesburg, Iowa 52536 (US); Richardson, Craig Allen, Ottumwa, Iowa 52501 (US)
(74) Vertreter: Magin, Ludwig Bernhard

(57) **Zusammenfassung**

Ein Fahrzeug (14) zum Transport eines insbesondere fahrbaren Geräts (14) weist zwei Aufnahmeböden (154, 156) auf, die ungefähr mittig des Fahrzeugs (14) auf einem sich in dessen Fahrtrichtung erstreckenden Längsträger (88, 88') vertikal schwenkbar gelagert sind. Nahe des dem Aufnahmeende abgelegenen Endbereichs des Aufnahmebodens (154, 156) befindet sich ein Anschlag (134, 136) an dem das Gerät (10) zur Anlage gebracht und gesichert werden kann, wobei der Bereich zwischen dem Anschlag (134, 136) und der Kippachse des Aufnahmebodens (154, 156) zur Aufnahme des Geräts (10) bzw. dessen Räder (30, 32) bestimmt ist.

## Beschreibung

Die Erfindung betrifft ein Fahrzug zur Aufnahme eines zu transportierenden Geräts mit wenigstens einem Aufnahmeboden, der in einem Ladezustand auf eine Fahrzeugabstellfläche absenkbar ist, und mit wenigstens einem Anschlag nahe des Endes des Aufnahmebodens, sowie einen Verbund aus einem Fahrzeug und einem Gerät, das auf dem Fahrzeug quer zur Fahrtrichtung in Anlage an wenigstens einem Anschlag abgestellt ist und eine Zugdeichsel aufweist, die dem Anschluß des Verbunds an ein Zugfahrzeug dient.

Die US-A-4,607,996 offenbart ein Fahrzeug, das zum Transport eines Geräts, z. B. einer Mähmaschine bestimmt ist. Derartige vielfach selbst auf Rädern abgestützte Geräte werden dann auf einem Fahrzeug transportiert, wenn ihre Breite die zulässige Breite für den Straßentransport überschreitet oder wenn sie mit einer Geschwindigkeit transportiert werden sollen, für die sie nicht geeignet sind. Das bekannte Fahrzeug weist einen Hauptrahmen auf, der sich über zwei an einer Achse befestigte Räder auf dem Boden abstützt und beidenends sowohl Rampen als auch Böden aufweist, die ineinander übergehen. An den Rampen und Böden befinden sich Abstellvorrichtungen, die das Fahrzeug in einer mehr oder weniger waagrechten Lage während des Ladevorgangs halten. Endseitig der Böden sind Anschläge mit einer Verstellvorrichtung vorgesehen, die bewirken, daß die Rampen in eine Transportstellung hochgeschwenkt werden, sobald das Gerät an den Anschlägen zur Anlage gelangt. Zum Transport des Geräts wird dieses mittels eines Ackerschleppers oder dergleichen rückwärts auf die Rampen und anschließend auf die Böden gefahren und anschließend eine das Gerät mit dem Ackerschlepper verbindende Deichsel um 90° geschwenkt, wodurch das Fahrzeug nach der Längsachse und somit der Fahrtrichtung des Ackerschleppers ausgerichtet wird. Endlich werden die Abstellvorrichtungen auf einer Seite des Fahrzeugs angehoben und die Rampen vollends eingeklappt, so daß sie während des Straßentransports nicht seitlich überstehen. Das Gerät wird mittels eines Verriegelungsmechanismus, der von dem Anschlag betätigt wird, auf den Böden gesichert.

Dieses Fahrzeug ist insofern nachteilig, als ein zum Anheben der Rampen vorhandenes Gestänge relativ komplex und somit teuer und störungsanfällig ausgebildet ist. Außerdem müssen sowohl einige Abstellvorrichtungen als auch ein Teil der Rampen vor Aufnahme der Fahrt angehoben bzw. eingeklappt werden. Das Anheben der Rampen erfolgt nur, wenn das Gerät die Anschläge ausreichend weit und fest bewegt, wozu eine zuverlässige Positionierung des Geräts auf dem Fahrzeug erforderlich ist.

Das der Erfindung zugrunde liegende Problem wird darin gesehen, daß der Aufbau des bekannten Fahrzeugs zu aufwendig ist und es zu vieler Schritte bedarf, um den aus dem Fahrzeug und dem Gerät bestehenden Verbund transportfähig zu machen.

Dieses Problem wird erfindungsgemäß durch die Lehre des Patentanspruchs 1 bzw. 20 gelöst, wobei in den weiteren Patentansprüchen die Lösung in vorteilhafter Weise weiterentwickelnde Merkmale aufgeführt sind.

Auf diese Weise wird der Aufnahmeboden von dem Gewicht des Geräts in seine Transportstellung geschwenkt und dort gehalten. Die Lage der Schwenkachse gewährleistet, daß auch in der horizontalen Transportstellung des Auffahrbodens dieser nicht seitlich über das Fahrzeug hinausreicht. Sobald das Gerät seine Transportstellung eingenommen hat, ist somit auch das Fahrzeug grundsätzlich transportfähig.

Ein sich in Fahrtrichtung seitlich der Längsmittenachse des Fahrzeugs erstreckender Längsträger führt zu einer unmittelbaren Lastaufnahme in einem Seitenbereich des Fahrzeugs, was zu einer Anordnung des Geräts auf dem Fahrzeug im wesentlichen innerhalb dessen Grenzen führt. Die einseitige Anordnung des Längsträgers gewährleistet insbesondere auch, daß der Aufnahmeboden ohne Behinderungen auf den Boden abgesenkt werden kann.

Ein insbesondere T-förmig an den Längsträger angeschlossener Querträger des Hauptrahmens des Fahrzeugs dient zum einen der Radbefestigung und kann zum anderen auch als Auflage für das Gerät genutzt werden. Die mittige Anordnung des Querträgers stellt ebenfalls kein Hindernis für das evtl. aufzufahrende Gerät dar. Allerdings können auch zwei parallel zueinander verlaufende Querträger senkrecht und mittig an den Längsträger angeschlossen werden und das Rad bzw. die Räder in dem Raum zwischen sich aufnehmen. Auf diese Weise erhält der Hauptrahmen eine größere Festigkeit.

Ein mit dem Längsträger fest verbundener Anschlag bzw. eine an ihm vorgesehene Anlagefläche sorgen dafür, daß das Gerät genau die richtige Lage auf dem Fahrzeug einnimmt.

Die Ausbildung des Anschlags als ein umgekehrtes "U" macht es möglich, daß sich der Aufnahmeboden durch den Anschlag hindurch erstreckt, so daß das Gerät sicher bis an den Anschlag herangebracht werden kann.

Eine einfache Sicherung des Geräts auf dem Fahrzeug wird erreicht, wenn an diesem ein insbesondere fernverstellbarer Verriegelungshaken vorgesehen ist, der den Anschlag bzw. dessen Anlagefläche hintergreift.

Um einerseits eine zu tiefe Baubreite des Längsträgers zu vermeiden und andererseits einen gewissen Abstand zwischen dem Anschlag und der Schwenkachse einhalten zu können, ist wenigstens ein Arm an dem Längsträger vorgesehen, an dem der Aufnahmeboden mittels eines Schwenkbolzens oder dergleichen Schwenkverbindung vertikal beweglich angebracht ist.

Das Fahrzeug kann während des Ladens in seiner Stellung gehalten und leicht in seine Transportstellung gebracht werden, wenn Abstellstützen vorhanden sind, die vertikal schwenkbar angebracht sind.

Zur Vermeidung von Bedienungsaufwand ist es vorteilhaft wenn ein Automatismus zwischen der Stellung des Aufnahmebodens und der Abstellstütze bzw. den Abstellstützen hergestellt wird, was mittels eines Bewegungsübertragungsglieds, z. B. in der Art eines Lenkers, eines Seilzugs oder dergleichen erfolgen kann.

Das beste Ergebnis in den Stellungen des Aufnahmebodens und der Abstellstütze wird erreicht, wenn durch entsprechende Um- und Anlenkungen beide abhängig voneinander gesteuert werden, und zwar so, daß sie einmal beide ihre Ladeposition und einmal beide ihre Transportposition einnehmen, in der sie den weitestmöglichen Abstand zum Boden bzw. einer anderen Abstell- oder Abrollfläche wahren.

Der Aufnahmeboden wird in der Transportstellung geringstmöglich oder gar nicht belastet und das Gerät wird zusätzlich in seiner Lage gesichert, wenn der Aufnahmeboden eine Unterbrechung, Ausnehmung oder dergleichen oberhalb des Längsträgers aufweist, die es zuläßt, daß sich das Gerät, und zwar insbesondere dessen Räder auf dem Längsträger selbst abstützen, während der Aufnahmeboden selbst nur noch in seiner Lage gehalten wird.

Eine tandemartige Aufhängung der Räder des Fahrzeugs, gegebenenfalls jeweils über einen Schwenkarm, erhöht die Tragfähigkeit und die Kippsicherheit des Fahrzeugs beim Beladen.

Je nach der Beschaffenheit des zu transportierenden Geräts kann es vorteilhaft sein, mehrere, bei Spurfahrzeugen insbesondere zwei, Aufnahmeböden zu verwenden, die allerdings voneinander unabhängig verstellt werden können, damit bei asymmetrischem Auffahren, bzw. Aufschieben des Geräts auf das Fahrzeug keine Verspannungen auftreten und eine einfache Bauweise erhalten bleibt. Liegen mehrere Aufnahmeböden vor, sollten auch mehrere Abstellstützen verwendet werden, um das Fahrzeug dort abzustützen, wo das Gewicht direkt angreift.

Um das Fahrzeug auch dann fahren bzw. von mit einem Zugfahrzeug ziehen zu können, wenn sich kein Gerät auf ihm befindet, dessen Zugdeichsel zum Ziehen benutzt werden könnte, kann eine eigene Deichsel vorgesehen werden, die in ein Rohrteil an einem der Aufnahmeböden eingesetzt wird.

Zur weiteren Sicherung des Geräts auf dem Fahrzeug kann eine Verbindung zwischen dem Aufnahmeboden und dem Anschlag oder dem Längsträger vorgesehen werden.

Das Fahrzeug kann von Seitwärtsbewegungen während des Ladens abgehalten werden, wenn an dem Aufnahmeboden wenigstens ein Ankerteil vorgesehen ist, der in den Boden eingreift.

Ein Kippen des Fahrzeugs wird zuverlässig dann verhindert, wenn im Bereich jedes Endes des Längsträgers eine Abstellstütze vorhanden ist, die in einer einfachen Bauweise auch aus einer teleskopisch verstellbaren Stütze bestehen kann, die in einem Rohrhalter oder einer Schelle an dem Längsträger gehalten wird.

Ein Verbund aus einem Fahrzeug und einem Gerät, das mittels dieses Fahrzeugs transportiert werden soll, stellt eine sichere Einheit dar, wenn verstellbare Verriegelungshaken eine Verbindung zwischen dem Gerät und dem Fahrzeug erzeugen, wobei durch ein Hinter- oder Übergreifen des Verriegelungshakens ein Formschluß entsteht.

In einfacher Weise kann eine Verstellung der Verriegelungshaken dadurch erreicht werden, daß sie an einem Teil des Geräts befestigt werden, der ohnehin zur Verstellung bestimmt ist, z. B. weil er dessen Arbeitshöhe bestimmt. Solche Teile sind z. B. bei einem Mähgerät die Radtragarme, deren Stellung fernsteuerbar ist.

Eine günstige Momentenbelastung in dem Verbund tritt auf, wenn sich der Drehpunkt der Zugdeichsel des Geräts direkt über der Radachse bzw. der Achse der Tandemeinheiten befindet.

Besondere Vorteile erhält der Verbund dadurch, daß sein Fahrzeug eine oder mehrere vorteilhafte Ausbildungen des nach den Patentansprüchen 1 bis 19 beanspruchten Fahrzeugs aufweist.

In der Zeichnung ist ein nachfolgend näher beschriebenes Ausführungsbeispiel der Erfindung dargestellt. Es zeigt:
- Fig. 1: ein Zugfahrzeug, ein Gerät und Fahrzeug,
- Fig. 2: das Gerät beim Auffahren auf das Fahrzeug,
- Fig. 3: das Gerät auf dem Fahrzeug in einer angehobenen Stellung,
- Fig. 4: das Gerät auf dem Fahrzeug in einer abgesenkten Stellung
- Fig. 5: das Gerät auf dem Fahrzeug in einer Ansicht von hinten,
- Fig. 6: das Fahrzeug in einer perspektivischen Draufsicht,
- Fig. 7: einen Anschlag mit einem Aufnahmeboden in einer Schnittansicht von vorne gemäß der Linie 7-7 in der Figur 8 und in Blickrichtung der dazugehörigen Pfeile,
- Fig. 8: den Anschlag mit dem Aufnahmeboden aus Figur 7 in Seitenansicht,
- Fig. 9: eine Abstellstütze für das Fahrzeug in einer ersten Ausführung und
- Fig. 10: eine Abstellstütze für das Fahrzeug in einer zweiten Ausführung.

Vorab wird darauf hingewiesen, daß - außer es wäre etwas anderes ausgeführt - Bezugnahmen wie rechts oder links aus der Sicht eines Betrachters zu verstehen sind, der sich hinter einer betreffenden Maschine befindet und in Richtung der Vorwärtsbewegung der Maschine schaut. Außerdem können bestimmte Komponenten als in Paaren vorliegend beschrieben werden, obwohl nur eine der Komponenten gezeigt ist, was dann bedeutet, daß die nicht gezeigte Komponente identisch oder spiegelbildlich zu der gezeigten ausgebildet ist.

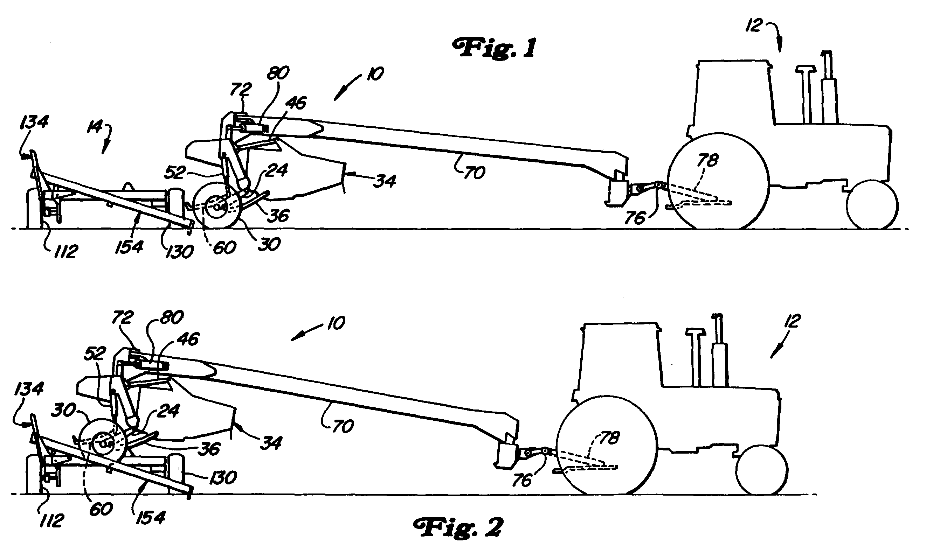

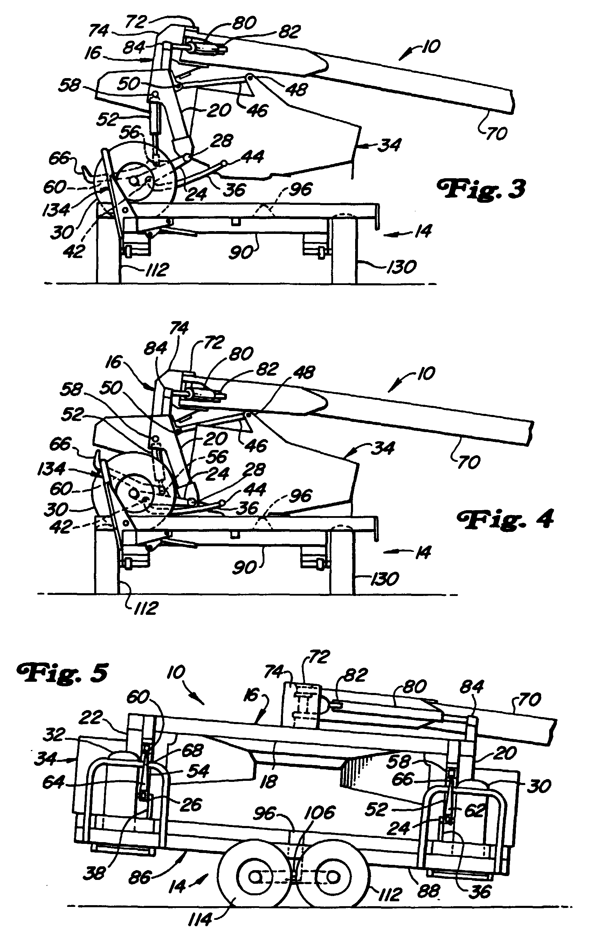

In den Figuren 1 bis 5 ist ein gezogenes Gerät 10, ein Zugfahrzeug 12 in der Art eines Ackerschleppers (nur Fig. 1 und 2) und ein Fahrzeug 14 ähnlich eines Anhängers für ein solches Gerät 10 gezeigt. Das Gerät 10 enthält einen radabgestützten Hauptrahmen 16 mit einem Querbalken 18, der parallele rechte und linke Radpfosten 20 bzw. 22 aufweist, die an dessen entgegengesetzten Enden angebracht sind. An die Fußenden der Radpfosten 20, 22 sind schwenkbar und nachlaufend rechte und linke Radtragarme 24 und 26 angeschlossen, wobei nur ein Schwenkbolzen 28, nämlich der, der den Radtragarm 24 an den Radpfosten 20 anschließt, gezeigt ist. Ein Paar auf dem Boden abrollender Räder 30 und 32 ist jeweils rückwärtig an den Radtragarmen 24, 26 angebracht. Eine sich längs erstreckende Erntebergungsvorrichtung 34 ist parallel zu und vor dem Querbalken 18 vorgesehen. Die Erntebergungsvorrichtung 34 ist mittels eines Schwebe- oder Schwimmgestänges mit rechten und linken unteren Lenkern 36 und 38 für vertikale Schwimmbewegungen während des Betriebs aufgehängt. Die jeweiligen rückwärtigen Enden der unteren Lenker 36 und 38 sind wie bei der Anschlußstelle 42 schwenkbar an die Radtragarme 28 und 30 angeschlossen, während deren vordere Enden wie bei der Anschlußstelle 44 schwenkbar an rückwärtige untere Stellen des Rahmens der Erntebergungsvorrichtung 34 angeschlossen sind. Ein mittlerer Lenker 46 ist - wie von der Seite zu sehen ist - im wesentlichen parallel zu den unteren Lenkern 36 und 38 vorgesehen und hat einen vorderen Endbereich, der wie bei der Anschlußstelle 48 an den Rahmen der Erntebergungsvorrichtung 34 schwenkbar angreift, und einen rückwärtigen Endbereich, der wie bei der Anschlußstelle 50, schwenkbar an den Querbalken 18 angeschlossen ist. Paarweise vorgesehene Hydraulikzylinder 52 bzw. 54 haben kolbenstangenseitige Enden, die schwenkbar an die Radtragarme 24, 26 angeschlossen sind, wobei nur gezeigt ist, wie ein Schwenkbolzen 56 den Hydraulikzylinder 52 an den Radtragarm 24 anschließt. Die jeweiligen zylinderseitigen Enden sind mittels Schwenkbolzen 58 und 60 an einen einen Halter bildenden Teil des Hauptrahmens 16 schwenkbar angeschlossen. Es wird somit ersichtlich, daß das Ausfahren der Hydraulikzylinder 52 und 54 eine Schwenkbewegung der Radtragarme 24 und 26 nach unten bewirkt, so daß sich die Erntebergungsvorrichtung 34 in ihre Transportstellung anhebt, wie dies in den Figuren 1 bis 3 gezeigt ist. Hingegen bewirkt ein Einfahren der Hydraulikzylinder 52 und 54, daß die Radtragarme 24 und 26 nach oben schwenken, was ein Absenken der Erntebergungsvorrichtung 34 in eine Arbeitsstellung bewirkt, wie die in Figur 4 gezeigt ist. Ein Paar Verriegelungsarme 62 und 64 ist für einen weiter unten erläuterten Zweck vorgesehen. Diese Verriegelungsarme 62 und 64 weisen vordere Endbereiche auf, die auf die Oberseiten der Radtragarme 24 und 26 montiert sind, erstrecken sich von den Radtragarmen 24 und 256 ausgehend nach hinten und laufen jeweils in nach oben weisenden Verriegelungshaken 66 und 68 aus. Eine Zugdeichsel 70 weist einen rückwärtigen Endbereich auf, der wie bei der Anschlußstelle 72 an einen Lagerbock 74, der sich in mittiger Anordnung auf dem Querbalken 18 befindet, schwenkbar angeschlossen ist. Ein vorderer Endbereich der Zugdeichsel 70 kann wie bei der Anschlußstelle 76 an untere Lenker 78 des Zugfahrzeugs 12 angeschlossen werden. Ein Zylinderlende eines Schwenkzylinders 80 für die Zugdeichsel 70 ist mittels eines Schwenkbolzens 82 schwenkbar an die Zugdeichsel 70 angeschlossen, während das kolbenstangenseitige Ende mittels eines Bolzens 84 an einer Stelle nahe des rechten Endes des Querbalkens 18 mit diesem verbunden ist.

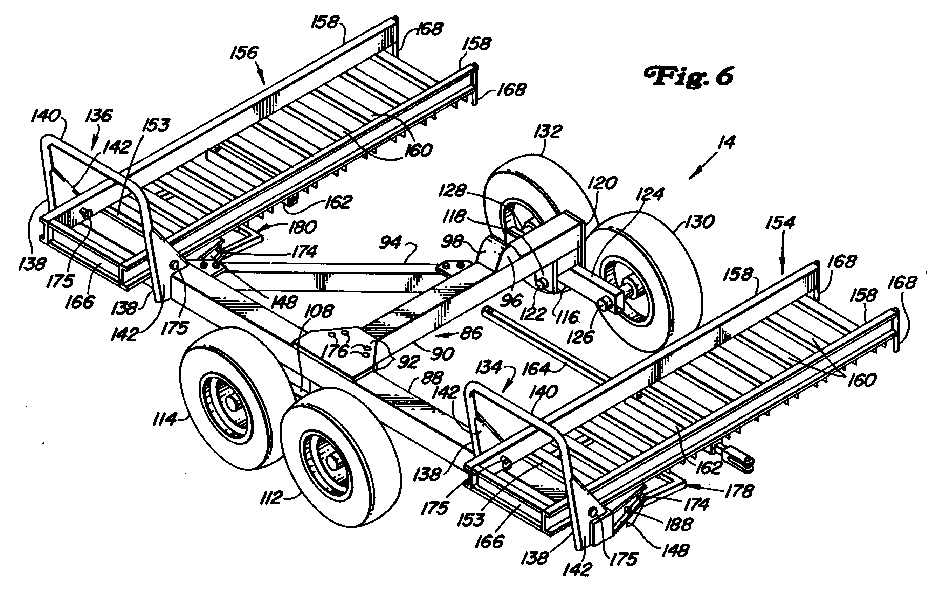

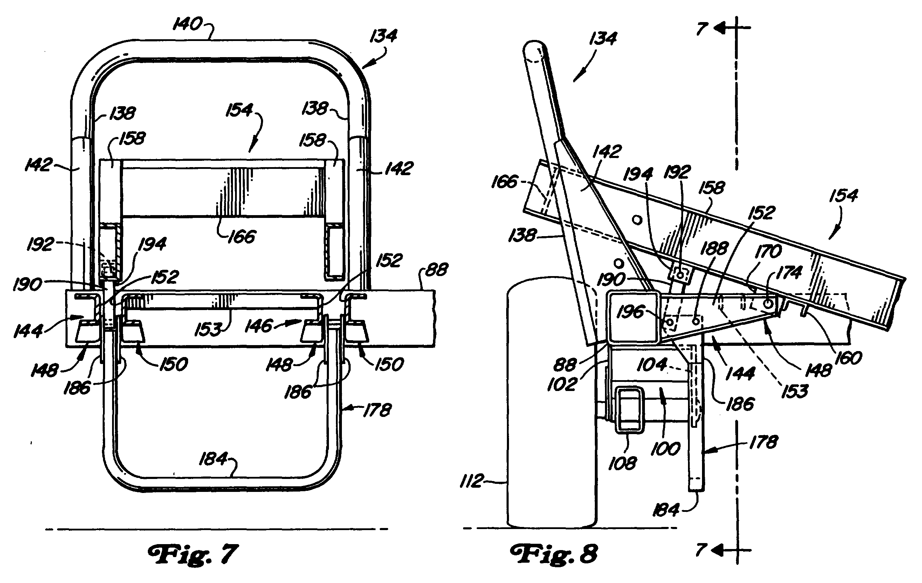

Die folgende Beschreibung bezieht sich auf das in Figur 6 Dargestellte, in der zur Vereinfachung der Beschreibung das rechte Ende des Fahrzeugs 14 als dessen vorderes Ende behandelt wird. Das Fahrzeug 14 enthält einen Hauptrahmen 86 mit einem ersten rohrförmigen Längsträger 88, der sich längs in der Fahrtrichtung und auf einer Seite des Fahrzeugs 14 erstreckt. Der Hauptrahmen 86 weist zudem einen zweiten rohrförmigen Querträger 90 auf, der sich quer zu der Fahrtrichtung erstreckt und dessen eines Ende z. B. mit Versteifungsblechen 92 an einem Mittenbereich des ersten Längsträgers 88 zwischen dessen entgegengesetzten Ende fest angebracht ist. Eine sich aus den beiden Trägern 88, 90 ergebende Bauweise weist eine T-Form auf, wobei der obere Teil des "T" von dem Längsträger 88 und dessen Fuß von dem Querträger 90 gebildet wird. Eine Strebe 94 erstreckt sich zwischen den Trägern 88 und 90 und ist mit ihren entgegengesetzten Enden an diesen befestigt. Ein Auflageelement 96 für die Erntebergungsvorrichtung 34 ist auf der Oberseite des Trägers 90 an einer Stelle befestigt, die einen Abstand zu dem linken Ende des Trägers 90 einhält aber sich noch in dessen Nähe befindet. Das Auflageelement 96 bildet eine gekrümmte Stütz- oder Ruhefläche 98. Eine rechte Achstragkonsole 100 (nur in Fig. 8 zu sehen) ist teilweise an der Unterseite des Längsträgers 88 und teilweise an der Unterseite des Querträgers 90 befestigt und überbrückt somit die Verbindungsstelle des Längs- und des Querträgers 88, 90. Die Achstragkonsole 100 enthält ein Paar beabstandeter, paralleler Platten 102 und 104, und ein rechter Kipp- oder Schwenkarm 108 ist mittels eines Schwenkbolzens 106 (nur Figur 5) zwischen den Platten 102, 104 vorgesehen und schwenkbar mit diesen verbunden ist. Vordere und rückwärtige Achsen 110, von denen nur eine einzige gezeigt ist, (Fig. 8) sind jeweils an den vorderen und rückwärtigen Endbereichen des Schwenkarms 108 angebracht, erstrecken sich nach rechts von diesen und nehmen vordere und rückwärtige Räder 112 und 114 jeweils drehbar auf. In gleicher Weise ist eine linke Achstragkonsole 116 an der Unterseite des linken Endbereichs des Querträgers 90 angeschlossen. Die Achstragkonsole 116 enthält ein Paar paralleler und beabstandeter Platten 118 bzw. 120, und ein linker Schwenkarm 124 erstreckt sich zwischen diesen Platten 118, 120 und ist wie mit einem Schwenkbolzen 122 schwenkbar an diesen angebracht. Vordere und rückwärtige Achsen 126 und 128 sind jeweils an vorderen bzw. rückwärtigen Endbereichen des Schwenkarms 124 befestigt und erstrecken sich von diesem nach links, und vordere und rückwärtige Räder 130 bzw. 132 sind auf diesen Achsen 126, 128 drehbar gelagert. Auf diese Weise definieren die Schwenkbolzen 106 und 122 eine horizontale, quer verlaufende Achse, um die der Hauptrahmen 86 schwenken kann. Wenn auch die Benutzung der Schwenkarme 108 und 124 zusammen mit den in Tandembauweise angeordneten Rädern 112, 114, 130, 132 erwünscht ist, so können doch viele Vorteile der vorliegenden Erfindung auch mit einem Fahrzeugaufbau erreicht werden, der auf jeder Seite nur ein Rad benutzt, das direkt an den Hauptrahmen 86 an Stellen angebracht ist, die denen der Schwenkbolzen 106 und 122 entsprechen.

Ein Paar vorderer und rückwärtiger Anschläge 134 bzw. 136 ist an die vorderen und rückwärtigen Endbereiche des Längsträgers 88 des Hauptrahmens 86 angeschlossen und erstrecken sich von diesen nach oben. Jeder der Anschläge 134, 136 enthält einen rohrförmigen Teil, der eine U-Form einnimmt und in der Längsrichtung beabstandete aufrechte Schenkel 138 bildet, deren obere Enden mittels eines Bügels miteinander verbunden sind, der als Haltestange 140 dient. An einen unteren Bereich jedes Schenkels 138 ist ein geformtes Versteifungsblech 142 angeschweißt, das umgekehrt wieder an obere und äußere Oberflächen des Längsträgers 88 angeschweißt ist.

Es wird nun auf die Figuren 7 und 8 Bezug genommen, in denen zu erkennen ist, daß sich nahe jedes vorderen und rückwärtigen Anschlags 134, 136 vordere und rückwärtige Stützen 144 bzw. 146 befinden, wobei jede Stütze 144, 146 vordere und rückwärtige Hohlprofile 148 bzw. 150 enthält. Die Hohlprofile 148, 150 verfügen über parallele Arme 152, die zueinander einen Abstand aufweisen und einander zugewandt sind und die derart an eine innere oder linke Fläche des Längsträgers 88 angeschweißt sind, daß sie sich unter einem rechten Winkel von dieser aus nach links erstrecken. Eine hohlkörperartige Leiste 153 erstreckt sich zwischen den Armen 152 und ist an diese angeschweißt, und zwar an die rückwärtigen Hohlprofile 150 jeder vorderen Stütze 144 bzw. an die vorderen Hohlprofile 148 jeder rückwärtigen Stütze 146. Die vorderen und rückwärtigen Stützen 144, 146, die sich nahe der vorderen Anschläge 134 befinden, weisen einen Abstand zwischen sich auf, der gerade geringfügig kleiner ist als der Abstand zwischen den Schenkeln 138, während die vorderen und rückwärtigen Stützen 144, 146, die sich nahe des rückwärtigen Anschlags 136 befinden, einen Abstand zueinander aufweisen, der gerade geringfügig kleiner ist als der Abstand zwischen den Schenkeln 138 des rückwärtigen Anschlags 136.

Das für den Transport des Geräts 12 bestimmte Fahrzeug 14 enthält ferner identische vordere und rückwärtige, sich quer erstreckende Lade- bzw. Aufnahmeböden 154 bzw. 156. Jeder Aufnahmeboden 154, 156, der auch als Rampe bezeichnet werden könnte, enthält ein Paar paralleler und sich längs erstreckender Seitenschienen 158, die von sich an entgegengesetzten Seiten öffnenden Hohlprofilen gebildet werden und einen Abstand zueinander aufweisen, der im wesentlichen gleich dem Abstand zwischen den Stützen 144 und 146 ist. Die Seitenschienen 158 sind mittels einer Vielzahl identischer Leisten 160 miteinander verbunden, die die Form sich nach unten öffnender Hohlprofile einnehmen und sich quer zu dem unteren Flansch der Seitenschienen 158 erstrecken und an diesen unter gleichen Abständen angeschweißt sind, wobei eine am weitesten rechts gelegene Leiste 160 nahe des linken Endes der Stützen 144 und 146 angeordnet sind. In gleicher Weise ist ein Rohrteil 162 von vierreckigem Querschnitt an den unteren Flansch der Seitenschienen 158 an einer Stelle angeschweißt, die sich ungefähr auf dem halben Weg zwischen entgegengesetzten Enden jedes Aufnahmebodens 154 und 156 befindet. Eine Deichsel 164 ist teleskopisch in diesem Rohrteil 162 aufgenommen, der einen Teil des vorderen Aufnahmebodens 154 bildet, und ist zwischen einer Speicherstellung, wie sie in Figur 6 gezeigt ist und in der sie in den Rohrteil 162 eingeschoben ist, und einer ausgezogenen Zugstellung beweglich, die in den Fällen benutzt wird, in denen es gewünscht wird, das Fahrzeug 14 ohne aufgeladenes Gerät 10 zu bewegen. Selbstverständlich kann die Deichsel 164 auch in dem Rohrteil 162 des rückwärtigen Aufnahmebodens 156 untergebracht werden, wenn es gewünscht wird, das leere Fahrzeug 14 in der entgegengesetzten Richtung zu ziehen. Das jeweils rechte Ende jedes Aufnahmebodens 154, 156 wird mittels eines Sperrteils 166 verschlossen, der sich zwischen den Stegen der Seitenschienen 158 erstreckt und an diese angeschweißt ist. Daneben ist ein Ankerteil 168, der in den Boden eindringt, an dem linken Ende jeder Seitenschiene 158 jedes Aufnahmebodens 154 und 156 angebracht und erstreckt sich von diesem aus nach unten.

Ein rechter Endbereich des vorderen Aufnahmebodens 154 ist zwischen den Schenkeln 138 des vorderen Anschlags 134 und zwischen den vorderen und rückwärtigen Stützen 144 und 146 des vorderen Stützaufbaus aufgenommen und erstreckt sich in der angehobenen Stellung, wie sie in Figur 6 gezeigt ist, nach rechts über den Längsträger 88. Der Aufnahmeboden 154 kann dann auf dem Längsträger 88 ruhen oder geringfügig oberhalb von ihm feststehen. In gleicher Weise wird ein rechter Endbereich des rückwärtigen Aufnahmebodens 156 zwischen den Schenkeln 138 des rückwärtigen Anschlags 136 und zwischen den vorderen und rückwärtigen Stützen 144 und 146 des rückwärtigen Stützzusammenbaus aufgenommen und wird von dem Längsträger 88 getragen, wobei das ganz rechts gelegene Ende des Aufnahmebodens 156 einen Abstand zu dem Längsträger 88 nach rechts aufweist. Befestigungsbleche 170 sind an den unteren Steg jeder Seitenschiene 158 des vorderen und rückwärtigen Aufnahmebodens 154 und 156 nahe dessen am weitesten rechts gelegenen Leiste 160 angebracht und erstrecken sich von diesen aus nach unten. Die Befestigungsbleche 170 erstrecken sich zwischen den Armen 152 der vorderen und rückwärtigen Hohlprofile 148 und 150 jeder der vorderen und rückwärtigen Stützen 144, 146, und zwar jeweils nahe deren linken Ende. Schwenkbolzen 174 sind in axial fluchtende Löcher in benachbarten Befestigungsblechen 170 und Armen 152 eingeschoben und definieren eine horizontale, sich längs erstreckende Schwenkachse, um die die Aufnahmeböden 154 und 156 jeweils zwischen einer angehobenen und einer abgesenkten Stellung geschwenkt werden können. Die angehobene Stellung stellt eine horizontale Transportstellung dar, wie sie in Figur 6 zu sehen ist, und die abgesenkte Stellung entspricht einer Ladestellung, in der die Ankerteile 168 in den Boden eingreifen, wie dies aus den Figuren 1 und 2 hervorgeht. Ein Paar Verriegelungsbolzen 175 ist vorgesehen, um die Aufnahmeböden 154 und 156 in ihrer angehobenen Transportstellung - sh. Fig. 6 - zu sichern. Die Verriegelungsbolzen 175 werden lösbar in aneinander ausgerichteten Löchern aufgenommen, die in den Versteifungsblechen 142 und den dazugehörigen Seitenschienen 158 der Aufnahmeböden 154 und 156 vorgesehen sind. Löcher 176 zum Aufnehmen der Verriegelungsbolzen 175, wenn sie nicht benötigt werden, d. h. wenn sich die Aufnahmeböden 154 und 156 in ihrer Ladestellung befinden, sind in den Versteifungsblechen 92 vorgesehen.

Identische vordere und rückwärtige Abstellstützen 178 und 180, von denen nur die vordere Abstellstütze 178 gezeigt und im Detail beschrieben ist, sind jeweils dem vorderen und rückwärtigen Aufnahmeboden 154 und 156 zugeordnet. Wie es am besten aus den Figuren 7 und 8 hervorgeht, enthält die Abstellstütze 178 einen rohrartigen, U-förmigen Stützteil 184, wobei die Enden von jedem seiner Schenkel zwischen einem Paar im wesentlichen rechteckiger Platten 186 aufgenommen sind, die sich etwas über die Schenkel hinaus erstrecken und mit diesen verschweißt sind. Die rechteckförmigen Platten 186 eines Schenkels erstrecken sich zwischen den Armen 152 der Hohlprofile 148 und 150 der vorderen Stütze 144, während sich die rechtwinkligen Platten 186 des anderen Schenkels zwischen den Armen 152 der Hohlprofile der rückwärtigen Stützen 146 erstrecken. Ein Paar Schwenkbolzen 188, die jeweils in fluchtenden Bohrungen in den rechtwinkligen Eckbereichen der rechtwinkligen Platten 186 und in den Armen 152 der Hohlprofile 148 und 150 vorgesehen sind, dienen dazu, die Abstellstützen 178 schwenkbar an die Stützen 144 und 146 anzuschließen. Ein Bewegungsübertragungsglied 190 hat einen Endbereich, der z. B. mittels eines Schwenkbolzens 192 an parallele Schenkel einer an die Unterseite der vorderen Seitenschiene 158 angeschweißten Lasche 194 angelenkt ist, und einen anderen Endbereich, der z. B. mittels eines Schwenkbolzens 196 an einen anderen Eckabschnitt der vorderen rechtwinkligen Platte 186 schwenkbar angelenkt ist, damit die Abstellstütze 178 automatisch in Abhängigkeit von einem Anheben oder Absenken des Aufnahmebodens 154 angehoben oder abgesenkt wird. Wenn sich der Aufnahmeboden 154 wie in Figur 8 gezeigt ist, in seiner abgesenkten Stellung befindet, nimmt die Abstellstütze 184 im wesentlichen eine vertikale Stellung ein, wobei sich ihr unterer Endbereich wenigstens in der Nähe des Bodens befindet. Das Bewegungsübertragungsglied 190 erstreckt sich dann nach unten und geringfügig von der Lasche 194 zu dem Längsträger 88 hin. Wenn der Aufnahmeboden 154 angehoben wird, bewirkt das Bewegungsübertragungsglied 190 ein Schwenken der Abstellstütze 184 entgegen dem Uhrzeigerdrehsinn um den Schwenkbolzen 180 in eine im wesentlichen horizontale Stellung, wie dies in Figur 6 gezeigt ist.

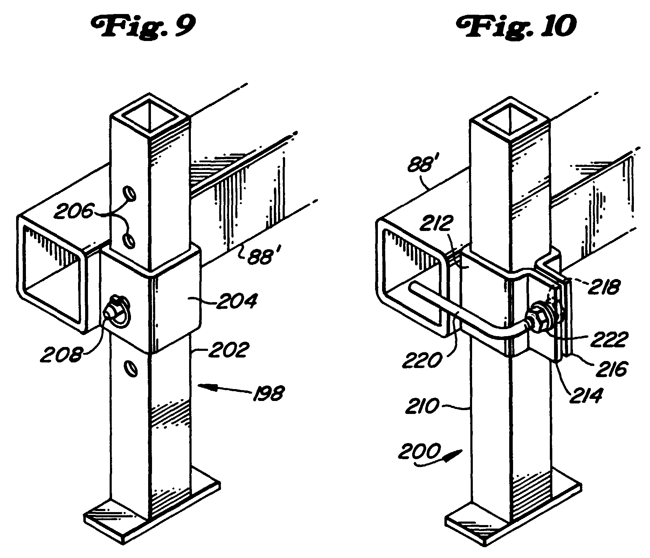

Anstatt der automatisch verstellbaren Abstellstützen 178 und 180 kann das Fahrzeug 14 auch mit manuell bedienbaren Abstellstützen ausgerüstet werden. Wenn auch jede Art einer manuell bedienten Abstellstütze benutzt werden kann, wird dennoch im weiteren Bezug auf das in den Figuren 9 bzw. 10 Gezeigte genommen, wo zwei teilweise gleiche erste und zweite manuell bedienbare Abstellstützen 198 bzw. 200 gezeigt sind. Gemäß der Zeichnung sind die Abstellstützen 198 bzw. 200 an einen vorderen Endbereich eines sich Längsträgers 88' des Hauptrahmens 86 angebracht, der sich nur insofern von dem oben erläuterten Längsträger 88 unterscheidet, als er geringfügig länger ist, so daß er sich nach vorne über die Anschläge 134 und hinten über die Anschläge 136 hinaus erstreckt. Lediglich die Abstellstütze 198 oder 200, die an den vorderen Bereich des Längsträgers 88' angebracht ist, ist gezeigt, was so zu verstehen ist, daß sich eine gleiche Abstellstütze 198, 200 auch an dem rückwärtigen Ende des Längsträgers 88' befindet.

Die Abstellstütze 198 enthält eine sich längs erstreckende rohrförmige Stütze 202 von viereckigem Querschnitt, die teleskopisch in einem Rohrhalter 204 von dazupassendem Querschnitt aufgenommen ist. Der Rohrhalter 204 ist an die linke Oberfläche des Längsträgers 88' angeschweißt. Die Stütze 202 ist mit einer Vielzahl von Befestigungslöchern 206 versehen, die einen vertikalen Abstand zueinander aufweisen, und ein Bolzen 208 ist vorgesehen, der in einem der Befestigungslöcher 206 und einem nach diesem ausgerichteten Loch in dem Rohrhalter 204 aufgenommen ist, um die Stütze 202 in einer gewünschten vertikalen Stellung zu halten. Die Stütze 202 und die entsprechende Abstellstütze an dem rückwärtigen Ende des Längsträgers 88' werden gegenüber dem Längsträger 88' für den Transport angehoben und diesem gegenüber abgesenkt, um eine evtl. Kipp- oder Schwenkbewegung des Hauptrahmens 86 um die von dem Schwenkanschluß der Schwenkarme 108 und 124 an dem Hauptrahmen 86 definierte Achse zu steuern bzw. zu verhindern, wenn ein Gerät 10 auf das Fahrzeug 14 aufgeladen wird.

Die Abstellstütze 200 ist mit einer sich längs erstreckenden rohrförmigen Stütze 210 von viereckigem Querschnitt versehen, die in einer rohrförmigen aufgetrennten und an die linke Oberfläche des Längsträgers 88' angeschweißte Schelle 212 von entsprechend passendem Querschnitt teleskopisch aufgenommen ist. Die Schelle 212 wird von einem entsprechend geformten Streifen gebildet, dessen entgegengesetzte Enden von einem Paar voneinander getrennter paralleler Flansche 214 und 216 bestimmt werden, die um 90° in bezug auf den benachbarten Abschnitt des Streifens gebogen sind und miteinander fluchtende Öffnungen besitzen. Eine erste Mutter 218 ist fluchtend mit der darin vorgesehenen Öffnung an den Flansch 216 angeschweißt. Ein L-förmiger Klemmgriff 220 besitzt ein Gewindeende, das sich durch die Öffnung erstreckt und in die erste Mutter 218 eingeschraubt ist. Eine mit einem Flansch versehene Klemmutter 222 ist auf das Gewindeende des Klemmgriffs 220 aufgesetzt und bringt ihren Flansch in Anlage mit dem Flansch 214, was bewirkt, daß beim Einschrauben des Klemmgriffs 220 in die erste Mutter 218 die Klemmutter 222 die Schelle 212 in eine feste Anlage mit der Stütze 210 bringt. Natürlich wird ein Lösen der Schelle 212, um eine vertikale Bewegung der Stütze 210 zuzulassen, dadurch erreicht, daß der Klemmgriff 220 so gedreht wird, daß er sich aus der ersten Mutter 218 entfernt. Es wird hier angemerkt, daß die Abstellstütze 200 den Vorteil gegenüber der Abstellstütze 198 hat, daß es beim Ruhen eines großen Gewichts des auf das Fahrzeug 14 geladenen Geräts 10 auf der Stütze 202 oder 210 leichter ist, die Schelle 212 zum Anheben der Stütze 210 zu öffnen, als den Bolzen 208 aus den fluchtenden Öffnungen in der Stütze 202 und dem Rohrhalter 204 der Abstellstütze 198 zu ziehen. Die Handhabung der Abstellstütze 200 ist genau die gleiche wie die oben in bezug auf die Abstellstütze 198 beschriebene, mit Ausnahme der Art, wie die Stütze 202 zur Verstellung gelöst wird.

Es wird angenommen, daß die Funktion des Fahrzeugs 14 aus der obigen Beschreibung verständlich wird, aber nochmals kurz zusammengefaßt. Ein Laden eines Geräts 10 auf dem Fahrzeug 14 für Transportzwecke wird dadurch bewirkt, daß zunächst das Fahrzeug 14 an der gewünschten Verladestelle positioniert und dann vorbereitet wird, das Gerät 10 aufzunehmen, indem die Verriegelungsbolzen 175 der Aufnahmeböden 154 und 156 nacheinander entfernt und die Aufnahmeböden 154, 156 abgelassen werden, bis die Ankerteile 168 in den Boden eingreifen. Das Absenken der Aufnahmeböden 154, 156 führt automatisch dazu, daß die Abstellstützen 178 und 180 in ihre Abstellposition abgesenkt werden, in der ihre Fußenden nahe dem Boden gelangen oder diesen berühren, wie dies in den Figuren 7 und 8 gezeigt ist.

Vor dem Verladen auf das Fahrzeug 14 wird in diesem speziellen Ausführungsbeispiel eines Gerätes 10, dessen Erntebergungsvorrichtung 34 durch Ausfahren der Hydraulikzylinder 52 und 54 in die Transportstellung angehoben. Dann wird das Zugfahrzeug 12 oder ein beliebiges anderes selbstfahrendes Fahrzeug dazu benutzt, das Gerät 10 rückwärts mit den Rädern 30 bzw. 32 die Aufnahmeböden 154 und 156 hinauf zubewegen, wie dies ablaufmäßig in den Figuren 1 bis 3 gezeigt ist. Wenn die Räder 30 und 32 zum ersten mal die Aufnahmeböden 154 und 156 befahren, dringen die Ankerteile 168 in den Boden ein und verhindern, daß das Fahrzeug 10 seitwärts wegrutscht. Wenn dann die Räder 30 und 32 die Aufnahmeböden 154 und 156 hinauf rollen und gegebenenfalls über die von den Schwenkbolzen 174 gebildete Schwenkachse der Aufnahmeböden 154 und 156 gelangen, wird das Gewicht des Geräts 10 die Aufnahmeböden 154 und 156 und infolgedessen die Abstellstützen 178 und 180 in ihre Transportstellung anheben, wie dies in Figur 6 gezeigt ist. Dabei legen sich die Räder 30 und 32 gegebenenfalls an die Haltestangen 140 der Anschläge 134, 136 an und befinden sich in dieser Stellung unmittelbar auf dem Längsträger 88 des Hauptrahmens 86, da dort keine Leiste 160 vorhanden ist und sie die Leiste 153 überschritten haben. Während des Auffahrens des Geräts 10 auf das Fahrzeug 14 dienen die Abstellstützen 178 und 180 der Stabilisierung des Fahrzeugs 14 in bezug auf dessen Bestreben, um die von den Schwenkbolzen 106 und 122 der Schwenkarme 108 und 124 gebildete Achse zu kippen. Sobald die Räder 30 und 32 an den Anschlägen 134, 136 anliegen, werden die Hydraulikzylinder 52 und 54 eingefahren, um die Erntebergungsvorrichtung 34 abzusenken, bis sie auf dem Auflageelement 96 ruht. Das Einfahren der Hydraulikzylinder 52, 54 hat zur Folge, daß die Radtragarme 24 und 26 im Uhrzeigerdrehsinn schwenken, um so die Verriegelungshaken 66 und 68 der Verriegelungsarme 62 bzw. 64 in Eingriff mit den Haltestangen 140 zu bringen, wodurch das Gerät 10 - wie in den Figuren 4 und 5 gezeigt - auf dem Fahrzeug 14 gesichert wird.

Es wird hier darauf hingewiesen, daß sich die Anschlußstelle 72 der Zugdeichsel 70 nun ungefähr vertikal über der Kippachse des Hauptrahmens 86 befindet, wie sie durch die Schwenkbolzen 106 und 122 der Schwenkarme 108, 124 definiert ist. Diese Tatsache ist insofern bedeutend, als die Höhe des Zugangriffspunkts der Zugdeichsel 70 in einem Momentenarm resultiert, der eine beträchtliche Zugkraft auf den Hauptrahmen 86 ausübt, wobei diese Kraft verringert wird, wenn sich die Anschlußstelle 72 oberhalb der Achse befindet, die durch die Schwenkbolzen 106 und 122 der Schwenkarme 108, 124 definiert wird.

Jedenfalls wird, sobald das Gerät 10 auf das Fahrzeug 14 geladen ist, der Schwenkzylinder 80 betätigt, um den Hauptrahmen 16 zusammen mit dem Fahrzeug 14 um die Anschlußstelle 72 in bezug auf die Zugdeichsel 70 zu schwenken bis das Fahrzeug 14 im wesentlichen nach der Zugdeichsel 70 ausgerichtet ist. Die Sätze Räder 112, 114 und 130, 132 gleiten während dieser Schwenkbewegung. In manchen Situationen erweist es sich als hilfreich, dabei langsam mit dem Zugfahrzeug 12 zu fahren, um die Bewegung der Zugdeichsel 70 während ihres letzten Teils ihres Wegs zu ihrer Transportstellung hin zu unterstützen. Das Gerät 10 kann dann mit der sich längs der Fahrtrichtung erstreckenden Erntebergungsvorrichtung 34 transportiert werden.

Der Betrieb des Fahrzeugs 14 mit einer der manuell bedienten in den Figuren 9 und 10 gezeigten Abstellstützen 198 bzw. 200 anstelle der automatisch verstellten Abstellstützen 178, 180 ist im wesentlichen derselbe wie der bei den automatisch verstellten Abstellstützen 198, 200; allerdings besteht eine Ausnahme darin, daß eine Bedienungsperson zum Fertigmachen des Fahrzeugs 14 zur Aufnahme eines Geräts 10 die Stützen 202 bzw. 210 ablassen und zum Fertigmachen zum Transport nach dem Laden des Geräts 10 die Abstellstützen 200 oder 204 in ihre Transportstellung bringen muß.

In dem Fall, in dem es gewünscht wird, das Fahrzeug 14 ohne Benutzung des Geräts 10 zu bewegen, kann dies dadurch vorgenommen werden, daß die Bolzen, die die Deichsel 164 in ihrer eingezogenen Stellung in dem Rohrteil 162 halten, herausgenommen, die Deichsel 164 in ihre Betriebsstellung gezogen und die Bolzen wieder an ihren Platz zurückgesteckt werden. Das Fahrzeug 14 kann dann mittels irgendeines Zugfahrzeugs 12 gezogen werden, das eine Anhängevorrichtung besitzt, an die das Maul der Deichsel 164 angekuppelt werden kann. Das Fahrzeug 14 kann in der entgegengesetzten Richtung gezogen werden, wenn die Deichsel 164 in das Rohrteil 162 des Aufnahmebodens 156 eingesetzt wird.

## Patentansprüche

1. Fahrzeug (14) zur Aufnahme eines zu transportierenden Geräts (10) mit wenigstens einem Aufnahmeboden (154, 156), der in einem Ladezustand auf eine Fahrzeugabstellfläche absenkbar ist, und mit wenigstens einem Anschlag (134, 136) nahe des Endes des Aufnahmebodens (154, 156), dadurch gekenn-zeichnet, daß der Aufnahmeboden (154, 156) zwischen seinen Enden um eine sich in der Fahrtrichtung des Fahrzeugs (14) und zwischen dessen Rädern (112, 114, 130, 132) erstreckende Schwenkachse vertikal schwenkbar ist und in der Transportstellung eine im wesentlichen horizontale Lage einnimmt, und daß der Aufnahmeboden von dem Gewicht des Geräts (10) in seine Transportstellung geschwenkt und dort gehalten wird.

2. Fahrzeug nach Anspruch 1, gekennzeichnet durch einen Hauptrahmen (86) mit einem sich in Fahrtrichtung seitlich der Längsmittenachse des Fahrzeugs erstreckenden Längsträger (88, 88').

3. Fahrzeug nach Anspruch 1 oder 2, gekennzeichnet durch einen Hauptrahmen (86) mit einem sich quer zur Fahrtrichtung erstreckenden Querträger (90) zur Aufnahme wenigstens eines Rades (130, 132) des Fahrzeugs.

4. Fahrzeug nach Anspruch 2 und 3, dadurch gekennzeichnet, daß der Querträger (90) an dem Längsträger (88, 88') zwischen dessen Enden T-förmig angeschlossen ist.

5. Fahrzeug nach einem oder mehreren der vorherigen Ansprüche, dadurch gekennzeichnet, daß der Anschlag (134, 136) ortsfest an dem Längsträger (88) befestigt ist und insbesondere mittels einer Haltestange (140) eine seitlich von ihm gelagerte Anlagefläche für das Gerät (10) bildet.

6. Fahrzeug nach einem oder mehreren der vorherigen Ansprüche, dadurch gekennzeichnet, daß der Anschlag (134, 136) in der Form eines auf dem Kopf stehenden "U" ausgebildet ist und zwischen seinen Schenkeln (138) einen Freiraum bietet, der zur Aufnahme des Aufnahmebodens (154, 156) geeignet ist.

7. Fahrzeug nach einem oder mehreren der vorherigen Ansprüche, dadurch gekennzeichnet, daß der Freiraum des Anschlags (134, 136) der Aufnahme eines an dem Gerät (10) vorgesehenen beweglichen Verriegelungshakens (66, 68) dient.

8. Fahrzeug nach einem oder mehreren der vorherigen Ansprüche, gekennzeichnet durch wenigstens eine sich quer zur Fahrtrichtung von dem Längsträger (88, 88') fort erstreckende und an diesem befestigte Stütze (144, 146), die in ihrem auskragenden Endbereich einen Schwenkbolzen (174) zur schwenkbaren Befestigung des Aufnahmebodens (154, 156) aufnimmt.

9. Fahrzeug nach einem oder mehreren der vorherigen Ansprüche, gekennzeichnet durch wenigstens eine Abstellstütze (178, 180), die an dem Längsträger (88, 88') oder der Stütze (144, 146) vertikal schwenkbar angelenkt ist.

10. Fahrzeug nach einem oder mehreren der vorherigen Ansprüche, gekennzeichnet durch ein Bewegungsübertragungsglied (190) zwischen dem Aufnahmeboden (154, 156) und der Abstellstütze (178, 180).

11. Fahrzeug nach einem oder mehreren der vorherigen Ansprüche, gekennzeichnet durch eine Anbindung des Bewegungsübertragungsglieds (190) an dem Aufnahmeboden (154, 156) und der Abstellstütze (178, 180) derart, daß in einer Ladestellung des Aufnahmebodens (154, 156) beide die Abstellfläche berühren oder dieser nahe sind und in der Transportstellung eine im wesentlichen waagrechte Lage einnehmen.

12. Fahrzeug nach einem oder mehreren der vorherigen Ansprüche, dadurch gekennzeichnet, daß der Aufnahmeboden (154, 156) in seinem über dem Längsträger (88, 88') gelegenen Bereich eine Durchbrechung aufweist, die eine unmittelbare Abstützung des Geräts (10) - insbesondere dessen Räder (30, 32) - auf dem Längsträger (88, 88') erlaubt.

13. Fahrzeug nach einem oder mehreren der vorherigen Ansprüche, dadurch gekennzeichnet, daß seine Räder (112, 114) und (130, 132) in Tandembauweise jeweils an einem vertikal beweglichen Schwenkarm (108, 124) angebracht sind.

14. Fahrzeug nach einem oder mehreren der vorherigen Ansprüche, dadurch gekennzeichnet, daß mehrere, insbesondere zwei voneinander unabhängige Aufnahmeböden (154, 156) vorgesehen sind.

15. Fahrzeug nach einem oder mehreren der vorherigen Ansprüche, dadurch gekennzeichnet, daß an einem oder mehreren Aufnahmeböden (154, 156) ein Rohrteil (162) zur Aufnahme einer Deichsel (164) vorgesehen ist.

16. Fahrzeug nach einem oder mehreren der vorherigen Ansprüche, dadurch gekennzeichnet, daß der Aufnahmeboden (154, 156) an dem Anschlag (134, 136), insbesondere über einen Verriegelungsbolzen (175), festlegbar ist.

17. Fahrzeug nach einem oder mehreren der vorherigen Ansprüche, dadurch gekennzeichnet, daß der Aufnahmeboden (154, 156) in seinem auf die Abstelltfläche absenkbaren Endbereich mit einem oder mehreren Ankerteilen (168) versehen ist.

18. Fahrzeug nach einem oder mehreren der vorherigen Ansprüche, dadurch gekennzeichnet, daß beidenends des Längsträgers (88, 88') eine vertikal verstellbare Abstellstütze (178, 180, 198, 200) vorgesehen ist.

19. Fahrzeug nach einem oder mehreren der vorherigen Ansprüche, dadurch gekennzeichnet, daß die Abstellstützen (198, 200) an dem Längsträger (88') in einem Rohrhalter (204) oder einer Schelle (212) teleskopisch vertikal verstellbar sind.

20. Verbund aus einem Fahrzeug (14), insbesondere nach einem oder mehreren der Ansprüche 1 bis 19, und einem Gerät (10), das auf dem Fahrzeug (14) quer zur Fahrtrichtung in Anlage an wenigstens einem Anschlag (134, 136) abgestellt ist und eine Zugdeichsel (70) aufweist, die dem Anschluß des Verbunds an ein Zugfahrzeug (12) dient, dadurch gekennzeichnet, daß das Gerät (10) mit wenigstens einem verstellbaren Verriegelungshaken (66, 68) in Eingriff mit dem Fahrzeug (14) bringbar ist.

21. Verbund nach Anspruch 20, dadurch gekennzeichnet, daß die Verriegelungshaken (66, 68) an vertikal schwenkbaren Radtragarmen (24, 26) des Geräts (10) vorgesehen sind.

22. Verbund nach Anspruch 20 oder 21, gekennzeichnet durch eine Anordnung des Anschlags (134, 136) für das Gerät (10) auf dem Fahrzeug (14) derart, daß sich bei geladenem Gerät (10) die Anschlußstelle (72) einer schwenkbaren Zugdeichsel (72) an dem Gerät (10) im wesentlichen vertikal über der Radachse des Fahrzeugs (14) bzw. einer Kippachse von Schwenkarmen (108, 124) für Räder (112, 114) und (130, 132) in Tandemaufhängung befindet.
